# EUROPÄISCHE PATENTANMELDUNG

(11) **EP 1 018 455 A1**
(43) Veröffentlichungstag der Anmeldung: **12.07.2000**
(21) Anmeldenummer: 00100338.3
(22) Anmeldetag: 07.01.2000
(51) Int. Cl.: B60R 13/10, G09F 3/20

(54) **Parkscheinhalter**

(30) Priorität: 08.01.1999 DE 29900207 U
(71) Anmelder: Gornig, Kerstin, 45468 Mülheim (DE); Gornig, Peter, 45468 Mülheim (DE)
(72) Erfinder: Gornig, Peter, 45468 Mülheim an der Ruhr (DE)
(74) Vertreter: Cohausz & Florack

(57) **Zusammenfassung**

Die Erfindung betrifft eine Vorrichtung zum Befestigen eines Gegenstandes, insbesondere eines Parkscheines, an einer Fläche (4) eines Personenkraftwagens, die das technische Problem, den Aufbau zu vereinfachen und zugleich eine einfache Handhabung zu ermöglichen, löst mit einem Befestigungselement (6) zum Befestigen der Vorrichtung an der Fläche (4) und mit einem Federelement (8), wobei das Federelement (8) mit einem ersten Ende (10) an dem Befestigungselement (6) befestigt ist und im an der Fläche (4) befestigten Zustand an dieser mit dem zweiten Ende (12) elastisch federnd unter Vorspannung anliegt. Insbesondere wird die elastisch federnde Kraft von dem Federelement (8) selbst und/oder von einem zum Fixieren des Befestigungselementes (6) an der Fläche dienenden Saugnapf (22) erzeugt.

## Beschreibung

Die Erfindung betrifft eine Vorrichtung zum Befestigen eines Gegenstandes an einer in einem Personenkraftwagen angeordneten Fläche. Insbesondere handelt es sich um eine Haltevorrichtung für einen Parkschein, um diesen von innen an einer Scheibe des Kraftfahrzeuges zu befestigen.

Seit geraumer Zeit werden in den Innenstädten Automaten aufgestellt, an denen durch Einwurf eines entsprechenden Geldbetrages ein Parkschein ausgedruckt wird, der die maximale Parkdauer eines Personenkraftwagens auf einer vorgegebenen Fläche angibt. Diese Parkscheinautomaten haben die traditionellen Parkuhren weitgehend verdrängt.

Die so erkauften Parkscheine müssen innerhalb des Personenkraftwagens gut sichtbar angeordnet werden, damit eine Kontrolle der erlaubten Parkdauer möglich ist. Dazu wird üblicherweise der Parkschein auf den oberen Bereich des Armaturenbrettes lose hingelegt. Insbesondere bei windigem Wetter oder auch allein durch das Zuschlagen der Autotür kann der Parkschein jedoch vom Armaturenbrett herunterfallen und somit für eine Kontrollperson unsichtbar bleiben. Insbesondere ergibt sich dieses Problem bei Cabriolets, die mit offenem Verdeck geparkt werden. Bei diesen Kraftfahrzeugen werden die Parkscheine häufig hinter eines der Wischerblätter geklemmt, wobei der Parkschein dann zumindest teilweise verdeckt wird und es möglicherweise Probleme beim Ablesen der erlaubten Parkdauer ergibt.

Im Stand der Technik der DE 295 14 707 U ist ein Parkscheinaufsteller zur Fixierung und Halterung des Parkscheins parallel zur Windschutzscheibe offenbart. Dieser Parkscheinaufsteller besteht aus einem Sichtfenster aus einer durchsichtigen Akrylfolie, das mit einem Befestigungselement, das auf dem Armaturenbrett fixiert ist, verbunden ist. Eine Klemmfeder ist vorgesehen, um den Parkschein von einer Seite an das Sichtfenster anzudrücken, so daß der somit befestigte Parkschein von außen durch die Windschutzscheibe lesbar angeordnet ist. Als Befestigungen mit dem Armaturenbrett wird vorgeschlagen, entweder einen Klebestreifen zur direkten Befestigung oder einen Klettverschluß für ein abnehmbares Verbinden mit dem Armaturenbrett zu verwenden. Das Sichtfenster wird wiederum von zwei Metallbügeln eingeklemmt gehalten, so daß unterschiedliche Winkelstellungen möglich sind und das Sichtfenster somit an die Neigung der Windschutzscheibe angepaßt werden kann. Die Befestigungsart des Sichtfensters und der dabei entstehenden Hebelwirkung ergibt sich insgesamt ein instabiler Aufbau des Sichtfensters, wodurch die Handhabung beim Anbringen eines Parkscheines zwischen der Klemmfeder und dem Sichtfenster Probleme auftreten. Es ist nicht auszuschließen, daß dabei das Sichtfenster aus der Halterung herausgedrückt wird. Ein vorsichtiges Hantieren mit beiden Händen wird daher notwendig sein, um die Einstellung des Sichtfensters zur Windschutzscheibe nicht zu verändern. Ein weiterer Nachteil besteht in der Verwendung von Klebestreifen, um das Befestigungselement oder einen Teil des Klettverschlusses auf dem Armaturenbrett zu fixieren.

Der vorliegenden Erfindung liegt daher das technische Problem zugrunde, eine Vorrichtung zum Befestigen eines Gegenstandes, insbesondere eines Parkscheines, an einer Fläche eines Personenkraftwagens anzugeben, dessen Aufbau vereinfacht ist und zugleich eine einfache Handhabung ermöglicht.

Das zuvor aufgezeigte technische Problem ist durch eine Vorrichtung mit sämtlichen Merkmalen des Anspruches 1 gelöst. Die im wesentlichen aus zwei Elementen bestehende erfindungsgemäße Vorrichtung ergibt folgenden einfachen Aufbau. Zum einen wird das Befestigungselement an einer Fläche des Personenkraftwagens befestigt. Diese Fläche kann in bevorzugter Weise die Innenseite der Windschutzscheibe sein, jedoch kann auch das Befestigungselement auf der Oberfläche des Armaturenbrettes befestigt sein. Mit dem Befestigungselement ist ein Federelement mit seinem ersten Ende verbunden und das zweite Ende des Federelementes liegt elastisch federnd unter Vorspannung an der Fläche an. Zwischen dem zweiten Ende des Federelementes und der Fläche, insbesondere der Windschutzscheibe kann dann der Parkschein befestigt werden, so daß dieser von innen parallel an der Innenseite der Windschutzscheibe anliegt. Somit ergibt sich in jedem Fall eine gute Sichtbarkeit des Parkscheins von außen, wobei auch ungeübte Benutzer den Parkschein mit nur einer Hand zwischen dem Federelement und der Windschutzscheibe anordnen können. Denn dazu ist lediglich ein Dazwischenschieben des Parkscheins notwendig, wobei nur gegebenenfalls ein leichtes Anheben des zweiten Endes des Federelementes notwendig ist.

In bevorzugter Weise weist das Befestigungselement einen zylindrischen Grundkörper auf, an dessen Außenseite im unteren Bereich eine im wesentlichen vollständig umlaufenden Nut vorgesehen ist. In weiter bevorzugter Weise weist der Grundkörper eine Bohrung auf, in der ein Saugnapf zumindest teilweise angeordnet ist, so daß sich dieser bis unterhalb der unteren Fläche des Grundkörpers erstreckt. Das Befestigungselement besteht somit aus Grundkörper und Saugnapf. Dadurch kann der Grundkörper in einfacher und zuverlässiger Weise mit der Windschutzscheibe oder auch jeder weiteren Scheibe des Kraftfahrzeuges verbunden werden.

Das Federelement ist zumindest teilweise aus einem Draht oder aus einem flächigen Band hergestellt. Es weist vorzugsweise ein teilkreisförmiges erstes Ende und ein zweites Ende mit einer im wesentlichen gerade ausgerichtete Form auf. Im zusammengebauten Zustand ist dann das Federelement mit seinem ersten teilkreisförmigen Ende an dem Grundkörper des Befestigungselementes befestigt und steht in Eingriff mit der umlaufenden Nut. Dadurch wird das Federelement in seiner räumlichen Position fixiert, so daß das freie zweite Ende des Federelementes sich in einer vorgegebenen Position befindet.

Durch die zumindest teilweise kreisförmige Form des ersten Endes des Federelementes und der zylindrischen Form des Grundkörpers kann das Federelement um den Grundkörper herum verdreht werden, so daß eine genaue Einstellung der Position möglich ist, an der das Federelement an der Fläche des Personenkraftwagens anliegt.

In besonders bevorzugter Weise weist das zweite Ende des Federelementes als Anlageelement eine Kugel auf, so daß die Anlage des Federelementes an der Fläche punktförmig bzw. nahezu punktförmig ausgebildet ist. Somit kann in besonders einfacher Weise der flächige Gegenstand, also der Parkschein zwischen die Kugel und die Scheibe des Personenkraftwagens geschoben und somit in seiner Position fixiert werden.

In weiter bevorzugter Weise weist der Grundkörper eine, vorzugsweise zentrisch angeordnete, Bohrung auf, in der ein Saugnapf angeordnet ist, der sich bis unterhalb der unteren Fläche des Grundkörpers erstreckt. Dadurch wird eine einfache und sichere Befestigung der Vorrichtung an der Fläche ermöglicht. Weiterhin kann der Saugnapf zumindest teilweise die federnde Anlagekraft des zweiten Endes an der Fläche erzeugen. Dieses geschieht durch ein Verformen des Körpers des Saugnapfes relativ zur Fläche. Somit dient der Saugnapf zumindest teilweise als Federelement selbst, so daß das erste Ende des Federelementes nicht oder nicht allein die Federkraft erzeugen muß.

Die erfindungsgemäße Vorrichtung wurde zuvor im wesentlichen als Parkscheinhalter beschrieben. Jedoch ist die Verwendung der Vorrichtung nicht auf die Anbringung von Parkscheinen im Personenkraftwagen beschränkt. Zum einen können auch andere flächige Gegenstände, insbesondere Papierstücke an einer Scheibe eines Personenkraftwagens befestigt werden. Somit kann die erfindungsgemäße Vorrichtung auch beispielsweise im Personenkraftwagenhandel Verwendung finden, um Preis- und sonstige Informationsschilder von innen an einer Scheibe des Personenkraftwagens zu befestigen. Darüber hinaus kann die Vorrichtung auch bei normalen Schaufenstern in Geschäften Anwendung finden, um beispielsweise Preislisten oder Angebote von innen an einer Fensterscheibe zu befestigen. Ebenso ist auch die Verwendung der Vorrichtung an sogenannten schwarzen Brettern denkbar, um einzelne Papierstücke gut sichtbar an dem schwarzen Brett zu befestigen. Dazu sollte dann das zweite freie Ende des Federelementes möglichst klein ausgebildet sein, um den befestigten Zettel nur in geringem Maße zu verdecken.

Im folgenden wird ein Ausführungsbeispiel der vorliegenden Erfindung anhand der Zeichnung näher erläutert. In der Zeichnung zeigen
- Fig. 1: eine erfindungsgemäße Vorrichtung, die an einer Fläche befestigt ist, in einer Seitenansicht teilweise im Querschnitt,
- Fig. 2: die in Fig. 1 dargestellte Vorrichtung im entspannten Zustand,
- Fig. 3: den Grundkörper des Befestigungselementes in einer Draufsicht,
- Fig. 4: das Federelement in einer Draufsicht und
- Fig. 5: die an einer Fläche befestigte erfindungsgemäße Vorrichtung in einer perspektivischen Darstellung.

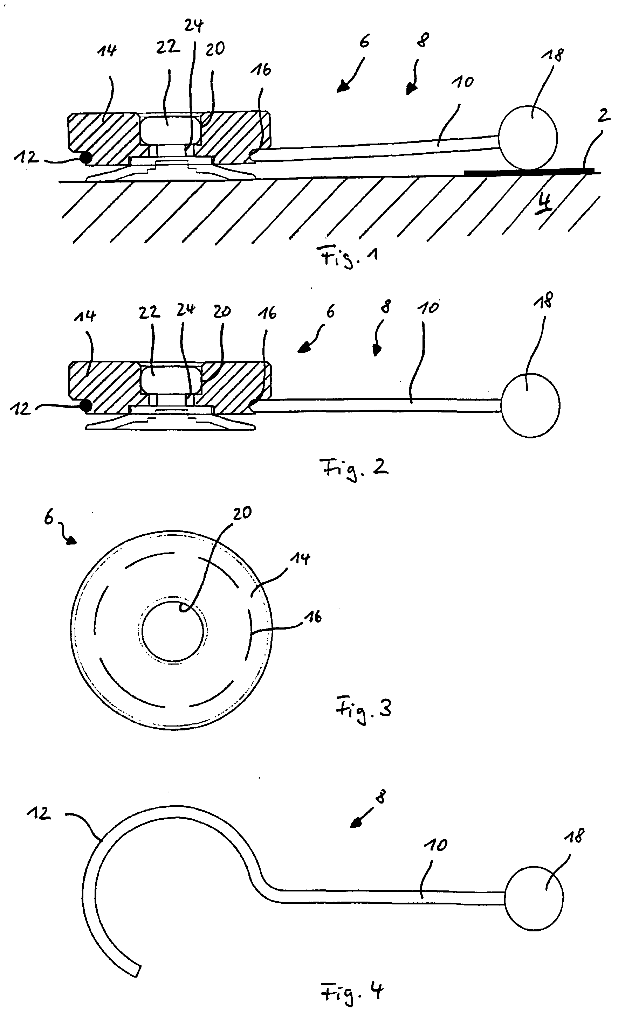

Fig. 1 zeigt eine erfindungsgemäße Vorrichtung zum Befestigen eines Parkscheines 2 an einer Fläche 4 eines nicht weiter dargestellten Personenkraftwagens. Die Vorrichtung weist ein Befestigungselement 6 zum Befestigen der Vorrichtung an der Fläche 4 und ein Federelement 8 auf. Das Federelement 8 ist an seinem ersten Ende 10 mit dem Befestigungselement 6 befestigt, während das zweite Ende 12 des Federelementes 8 seitlich vom Befestigungselement 6 vorragt. In dem in Fig. 1 dargestellten befestigten Zustand der Vorrichtung an der Fläche 4 liegt das zweite Ende 12 des Federelementes 8 an der Fläche 4 elastisch federnd unter Vorspannung an. Dieses ist durch die leicht durchgebogene Form des freien zweiten Endes 12 in Fig. 1 dargestellt.

In Fig. 2 ist die in Fig. 1 dargestellte Vorrichtung im entspannten, nicht an einer Fläche befestigten Zustand dargestellt. In diesem Zustand verläuft das zweite freie Ende 12 des Federelementes im wesentlichen gerade.

Wie in den Fig. 1 bis 3 dargestellt ist, weist das Befestigungselement 6 einen zylindrischen Grundkörper 14 auf. Im unteren Bereich des Grundkörpers, also der Fläche 4 in Fig. 1 zugewandten Ende des Grundkörpers ist an der Außenseite eine vollständig umlaufende Nut 16 ausgebildet. Die Grundfläche der Nut 16 ist in Fig. 3 als gestrichelter Kreis dargestellt.

Wie insbesondere in Fig. 4 dargestellt ist, ist das Federelement aus einem Draht hergestellt, der eine im wesentlichen kreisförmige Querschnittsfläche aufweist. Siehe dazu in den Fig. 1 und 2 die jeweils links dargestellte Schnittfläche. Das Federelement 8 weist an seinem ersten Ende 10 eine teilkreisförmige Form auf, deren Innendurchmesser an den Durchmesser der Grundfläche der Nut 16 angepaßt ist. Somit kann das teilkreisförmige erste Ende 10 des Federelementes 8 so mit dem Grundkörper 14 verbunden werden, daß das erste Ende 10 umfangseitig mit der Nut 16 in Eingriff steht. Dazu ist der Innendurchmesser des Teilkreises des ersten Endes 10 geringfügig kleiner als der Durchmesser der Nut 16 ausgebildet, um aufgrund der federnden Eigenschaft des Drahtes einen festen Sitz in der Nut zu gewährleisten. Somit wird das erste Ende 10 des Federelementes 8 in einer durch die Nut 16 vorgegebenen Ebene angeordnet, so daß das zweite freie Ende 12 des Federelementes 8 in einer vorgegebenen Position angeordnet ist. Dieses ist im wesentlichen gerade ausgebildet, wie in den Fig. 1, 2 und 4 dargestellt ist.

Das zweite Ende ist wie die Zeichnung zeigt, mit einem Anlageelement in Form einer Kugel 18 verbunden, die mit dem Draht am zweiten Ende 12 verbunden ist. Somit wird die eigentliche Anlagefläche des Federelementes durch die Oberfläche der Kugel gebildet, wie insbesondere in Fig. 1 dargestellt ist.

Die Fig. 1 bis 3 zeigen weiterhin, daß der Grundkörper eine zentrisch angeordnete Bohrung 20 aufweist, in der ein Saugnapf 22 angeordnet ist, der sich bis unterhalb der unteren Fläche des Grundkörpers 14 erstreckt. Dazu ist die Bohrung 20 gestuft ausgebildet, so daß der Saugnapf 22 mit einer umlaufenden Vertiefung 24 axial innerhalb der Bohrung 20 fixiert ist. Mit Hilfe des Saugnapfes 22 ist ein Befestigen des Grundkörpers 14 an einer Scheibe 4 oder an einer anderen glatten Oberfläche möglich.

Der Saugnapf 22 kann dabei zumindest teilweise die federnde Anlagekraft des zweiten Endes 12 an der Fläche 4 erzeugen. Dazu wird der Saugnapf 22 beispielsweise im Bereich der Vertiefung 24 verbogen, während der Saugnapf 22 mit der Saugfläche an der Fläche 4 anliegt und das erste Ende des Federelementes 8 gegenüber einer entspannten Stellung verstellt, insbesondere angehoben wird (nicht in der Zeichnung dargestellt). Es dient also nicht nur das erste Ende 10 des Federelementes 8 zum Erzeugen einer elastisch federnden Kraft, sondern der Saugnapf 22 selbst erzeugt diese Kraft. Die Härte des Materials des Federelementes 8 kann dabei so groß sein, daß die federnde Kraft nahezu ausschließlich vom Saugnapf 22 erzeugt wird.

Statt des zuvor dargestellten Saugnapfes 22 kann auch eine andere Art der Befestigung wie beispielsweise eine Schraubverbindung, eine Klettverbindung oder eine Klebeverbindung gewählt werden, wobei diese dann jedoch nur in geringem Maße für ein Erzeugen der elastischen Kraft verwendbar sind.

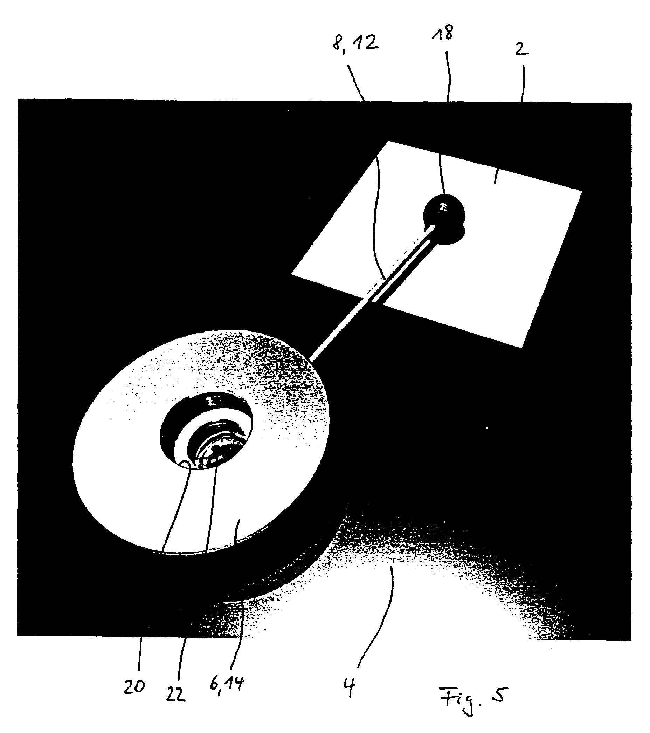

Fig. 5 zeigt eine perspektivische Darstellung der in Fig. 1 dargestellten Situation. Der Grundkörper 14 ist mit Hilfe des verdeckt dargestellten Saugnapfes mit einer Scheibe 4 eines Personenkraftwagens verbunden. Das Federelement 8 ist mit seinem ersten Ende 10 mit dem Grundkörper 14 verbunden, während die mit dem zweiten freien Ende 12 verbundene Kugel 18 einen Parkschein 2 an die Oberfläche der Scheibe 4 andrückt. Von der gegenüberliegenden, also außen liegenden Seite ist dann die beschriftete Seite des Parkscheins gut lesbar.

## Patentansprüche

1. Vorrichtung zum Befestigen eines Gegenstandes, insbesondere eines Parkscheines, an einer Fläche (4) eines Personenkraftwagens,
- mit einem Befestigungselement (6) zum Befestigen der Vorrichtung an der Fläche (4) und
- mit einem Federelement (8),
- wobei das Federelement (8) mit einem ersten Ende (10) an dem Befestigungselement (6) befestigt ist und im an der Fläche (4) befestigten Zustand an dieser mit dem zweiten Ende (12) elastisch federnd unter Vorspannung anliegt.

2. Vorrichtung nach Anspruch 1, dadurch gekennzeichnet, daß das Befestigungselement (6) einen zylindrischen Grundkörper (14) aufweist.

3. Vorrichtung nach Anspruch 2, dadurch gekennzeichnet, daß der Grundkörper (14) eine an seiner Außenseite, vorzugsweise im unteren Bereich angeordnete, im wesentlichen vollständig umlaufenden Nut (16) aufweist.

4. Vorrichtung nach einem der Ansprüche 1 bis 3, dadurch gekennzeichnet, daß das Federelement (8) zumindest teilweise aus einem Draht oder aus einem flächigen Band hergestellt ist.

5. Vorrichtung nach Anspruch 4, dadurch gekennzeichnet, daß das Federelement (8) an seinem ersten Ende (10) eine teilkreisförmige Form aufweist und an seinem zweiten Ende (12) im wesentlichen gerade ausgerichtet ist.

6. Vorrichtung nach Anspruch 4 oder 5, dadurch gekennzeichnet, daß das zweite Ende (12) des Federelementes (8) mit einem Anlageelement, insbesondere einer Kugel (18) verbunden ist.

7. Vorrichtung nach einem der Ansprüche 2 bis 6, dadurch gekennzeichnet, daß der Grundkörper (14) eine, vorzugsweise zentrisch angeordnete, Bohrung (20) aufweist, daß in der Bohrung (20) ein Saugnapf (22) angeordnet ist, wobei sich der Saugnapf (22) bis unterhalb der unteren Fläche des Grundkörpers (14) erstreckt.

8. Vorrichtung nach Anspruch 7, dadurch gekennzeichnet, daß der Saugnapf (22) zumindest teilweise die federnde Anlagekraft des zweiten Endes (12) an der Fläche (4) erzeugt.

9. Vorrichtung nach Anspruch 8, dadurch gekennzeichnet, daß der Saugnapf (22) die federnde Kraft durch ein Verformen seines Körpers relativ zur Fläche (4) erzeugt.

10. Vorrichtung nach einem der Ansprüche 1 bis 9, dadurch gekennzeichnet, daß das Befestigungselement (6) für ein Befestigen an der Innenseite einer Scheibe (4) des Personenkraftwagens und das Federelement (8) für ein Andrücken des Gegenstandes an die Scheibe (4) vorgesehen ist.
